# FASCICULE DE BREVET EUROPEEN

(11) **EP 1 610 928 B1**
(45) Date de publication et mention de la délivrance du brevet: **04.10.2006**
(21) Numéro de dépôt: 04717132.7
(22) Date de dépôt: 04.03.2004
(51) Int. Cl.: B23Q 17/22, G01B 7/00, G01B 21/02

(54) **DISPOSITIF DE MESURE AUTOMATIQUE DES DIMENSIONS D'UN OUTIL POUR MACHINE D'USINAGE**
AUTOMATISCHE WERKZEUGMESSVORRICHTUNG FÜR EINE BEARBEITUNGSMASCHINE
AUTOMATIC MEASURING DEVICE FOR MEASURING THE DIMENSIONS OF A TOOL FOR A MACHINE TOOL

(30) Priorité: 31.03.2003 FR 0303917
(43) Date de publication de la demande: 04.01.2006
(73) Titulaire: Thibaut, 14500 Vire (FR)
(72) Inventeur: THIBAUT, Jacques, F-14500 Vaudry (FR); THIBAUT, Christophe, F-14500 Vire (FR)
(74) Mandataire: Poupon, Michel
(86) Numéro de dépôt international: PCT/FR2004/000506
(87) Numéro de publication internationale: WO 2004/094104

(56) Documents cités:
- US-A- 4 016 784
- PATENT ABSTRACTS OF JAPAN vol. 009, no. 286 (M-429), 13 novembre 1985 (1985-11-13) & JP 60 127958 A (SUMITOMO TOKUSHIYU KINZOKU KK), 8 juillet 1985 (1985-07-08)
- PATENT ABSTRACTS OF JAPAN vol. 1997, no. 10, 31 octobre 1997 (1997-10-31) & JP 09 155693 A (HITACHI SEIKI CO LTD), 17 juin 1997 (1997-06-17)

## Description

La présente invention concerne un dispositif de mesure automatique des dimensions d'un outil pour machine d'usinage (voir, par exemple, JP-60127958).

Les machines d'usinage permettent, grâce à la présence d'un magasin comportant tous les outils nécessaires à l'usinage d'une pièce, de réaliser de manière entièrement automatique l'usinage d'une pièce, comme par exemple un plan de cuisine ou de salle de bain.

Toutefois, afin d'enchaîner toutes les opérations d'usinage de façon automatique, la machine d'usinage doit avoir mesuré et mémorisé les dimensions exactes de tous les outils stockés dans son magasin.

On connaît déjà dans l'état de la technique antérieur, des dispositifs permettant une telle mesure automatique des dimensions de chaque outil dans lesquels la broche de la machine équipée d'un outil vient coopérer avec le dispositif agencé sur la machine d'usinage afin de déduire, en fonction de son système de mesure propre de sa broche, les dimensions de l'outil.

Un de ces dispositifs est constitué par exemple de deux palpeurs séparés, respectivement un axial et un radial, la machine avec l'outil à mesurer dans sa broche vient en premier mettre en appui la face inférieure de l'outil sur le palpeur axial pour mesurer sa longueur, puis en second, met en appui la face extérieure sur le palpeur radial pour mesurer son diamètre.

Un tel dispositif de mesure, bien que précis, se révèle très onéreux et sensible aux chocs. Par ailleurs, il nécessite d'être situé dans un endroit protégé et à l'abri des projections d'usinage.

Un autre dispositif connu consiste à agencer sur la machine un faisceau laser. La machine détermine et mémorise les dimensions de l'outil lorsque celui-ci coupe le faisceau laser avec la face inférieure ou sa face extérieure correspondant respectivement à la détermination de la longueur et du diamètre de l'outil.

L'inconvénient majeur d'un tel dispositif réside dans le fait qu'il est mal adapté au travail de la pierre, dans laquelle sont réalisés par exemple les plans de cuisines, à cause des projections d'eau et de boue qui peuvent dévier ou obstruer le faisceau du laser.

Le but de l'invention est de proposer un dispositif de mesure automatique des dimensions d'un outil qui permet de résoudre tout ou partie des inconvénients précités.

A cet effet, la présente invention a pour objet un dispositif de mesure automatique des dimensions d'un outil pour machine d'usinage comportant une broche susceptible de recevoir un outil qui est apte à se déplacer pour coopérer avec le dispositif afin de déduire, en fonction d'un système de mesure propre de ladite broche, les dimensions de l'outil, caractérisé en ce qu'il est constitué d'une barre réalisée dans un matériau présentant des propriétés élastiques élevées, dont l'une de ces extrémités est solidaire d'un étrier fixé sur un bâti fixe et son extrémité libre opposée est en contact avec deux détecteurs disposés perpendiculairement l'un par rapport à l'autre et d'un étrier apte à coulisser sur la barre flexible qui est surplombé par un plateau sur lequel est apte à s'appuyer ledit outil à mesurer.

Suivant quelques dispositions intéressantes de l'invention :
- la barre est réalisée en un acier élastique et présente une section carrée,
- les détecteurs sont des fins de course micrométrique (présentant une protection élevée face aux agressions extérieures) dont l'un est disposé verticalement afin d'assurer la détermination de la longueur et l'autre est disposé horizontalement afin de déterminer le diamètre,
- chacun des détecteurs est relié à un système de mesure propre des positions de la broche permettant ainsi, lors de leur rupture de contact avec la barre, de déduire les dimensions de l'outil.
- le plateau est pourvu d'un bord biseauté.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en perspective d'un dispositif de mesure automatique des dimensions d'un outil pour machine d'usinage selon la présente invention,
- les figures 2 et 3 sont des vues suivant respectivement les flèches F1 et F2 de la figure 1, illustrant la mesure de la longueur d'un outil, et
- les figures 4 et 5 sont des vues similaires aux figures 2 et 3 illustrant l'outil de coupe dans une position permettant au dispositif de déduire le diamètre d'un outil de coupe.

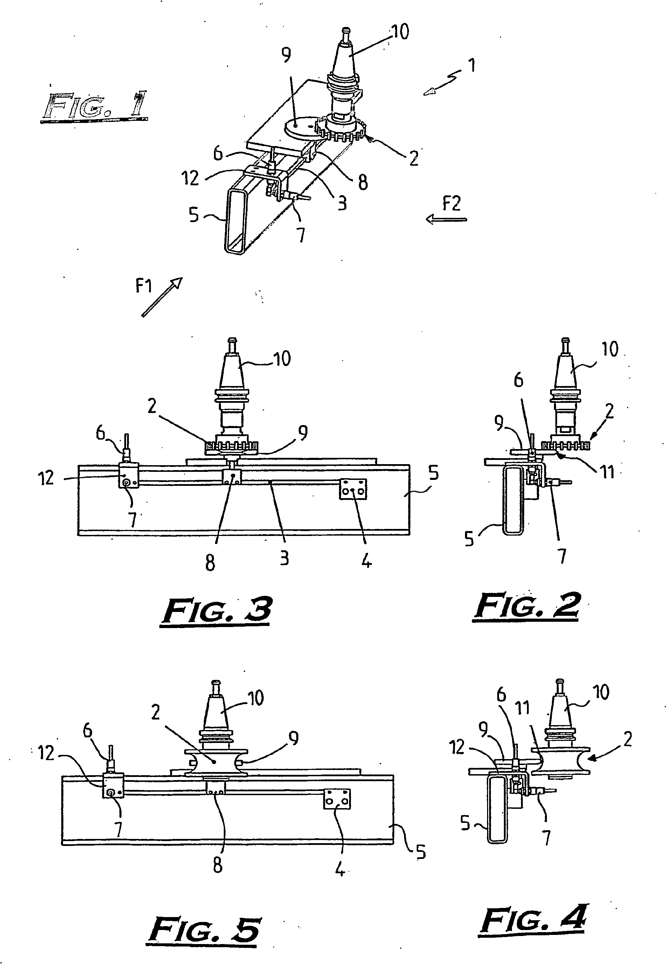

On a représenté aux figures 1 à 5, un dispositif de mesure automatique des dimensions 1 d'un outil de coupe 2 pour machine d'usinage, notamment à commande numérique, destiné à être positionné, par exemple, sur le côté du magasin d'outils de la machine.

Selon la présente invention, ce dispositif de mesure 1 est constitué d'une barre 3 réalisée dans un matériau présentant des propriétés élastiques élevées, dont l'une de ces extrémités est solidaire d'un étrier 4 fixé sur un bâti fixe 5 et son extrémité libre opposée est en contact avec deux détecteurs 6 et 7 disposés perpendiculairement l'un par rapport à l'autre et d'un étrier 8 apte à coulisser sur la barre flexible 3 qui est surplombé par un plateau 9 sur lequel est apte à s'appuyer l'outil 2 à mesurer monté sur une broche 10 de la machine d'usinage.

La barre 3 est avantageusement réalisée en un acier élastique et présente une section carrée permettant un bon contact avec les détecteurs 6 et 7, comme explicité plus bas.

Selon un mode de réalisation préférentielle, le plateau 9 est pourvu d'un bord biseauté 11 (comme visible aux figures 2 et 4) afin d'assurer une mesure adéquate du diamètre pour des outils 2 présentant des formes variées tel que par exemple un profil extérieur concave (figures 4 et 5).

Il convient en outre de noter que les détecteurs 6 et 7 sont avantageusement des fins de course micrométrique dont l'un 6 est disposé verticalement afin d'assurer la détermination de la longueur et l'autre 7 est disposé horizontalement afin de déterminer le diamètre, comme explicité plus en détail dans la suite de la description. Ces détecteurs 6 et 7 sont fixés, comme visibles sur les figures 2 et 4, sur une bride 12 présentant la forme générale d'un « L » rendu solidaire du bâti 5 afin d'assurer un contact avec la barre 3 uniquement par leurs extrémités.

Chacun de ces détecteurs 6 et 7 est relié à un système de mesure propre classique (non représenté) des positions de la broche 10 permettant ainsi, lors de leur rupture de contact avec la barre 3, de déduire les dimensions de l'outil 2.

On comprend aisément qu'afin de mesurer la longueur d'un outil 2, il suffit à la machine munie d'un outil dans sa broche 10, de venir mettre en appui la face inférieure de l'outil 2 sur la face supérieure du plateau 9 de l'étrier 8 engendrant ainsi une flexion de la barre 3 qui libère le fin de course verticale 6 afin de déduire en fonction des positions de référence de la broche 10 et d'enregistrer la longueur de l'outil 2.

De manière analogue, la mesure du diamètre extérieur d'un outil 2 s'effectue par la mise en contact avec l'extérieur de l'outil 2 sur le biseau 11 du plateau 9 provoquant une flexion latérale de la barre 3 libérant le fin de course horizontale 7 afin de déduire le diamètre de l'outil 2.

On notera que la précision de la mesure peut être optimisée en déplaçant l'étrier mobile 8 pourvu du plateau 9 et en l'éloignant le plus possible de l'extrémité libre de la barre 3 où sont situés les détecteurs 6 et 7. Ainsi plus l'amplitude de la barre 3 est importante, plus la mesure est précise.

Un tel dispositif de mesure automatique présente les avantages suivants :
1/ de ne pas être fragile contrairement aux solutions de l'état de la technique antérieure et fonctionne en outre quel que soit l'environnement à savoir humide ou poussiéreux,
2/ d'être économique à l'achat et à l'entretien,
3/ d'être fiable de par sa simplicité de conception et des composants utilisés.

Par ailleurs, en cas d'erreur de l'opérateur ou de la machine, seule la barre peut être endommagée. Celle-ci est facilement et rapidement remplaçable et à moindre coût.

Bien que l'invention ait été décrite en liaison avec un mode de réalisation particulier, elle comprend tous les équivalents techniques des moyens décrit7 tels que définis dans les revendications ci-jointes.

## Revendications

1. Dispositif de mesure automatique des dimensions d'un outil pour machine d'usinage comportant une broche (10) susceptible de recevoir un outil (2) qui est apte à se déplacer pour coopérer avec le dispositif (1) afin de déduire, en fonction d'un système de mesure propre de ladite broche (10), les dimensions de l'outil (2), **caractérisé en ce qu'**il est constitué d'une barre (3) réalisée dans un matériau présentant des propriétés élastiques élevées, dont l'une de ses extrémités est solidaire d'un étrier (4) fixé sur un bâti fixe (5) et son extrémité libre opposée est en contact avec deux détecteurs (6 et 7) disposés perpendiculairement l'un par rapport à l'autre et d'un étrier (8) apte à coulisser sur la barre flexible (3) qui est surplombé par un plateau (9) sur lequel est apte à s'appuyer ledit outil (2) à mesurer.

2. Dispositif de mesure automatique des dimensions d'un outil selon la revendication 1, **caractérisé en ce que** la barre (3) est réalisée en un acier élastique et présente une section carrée.

3. Dispositif de mesure automatique des dimensions d'un outil selon l'une quelconque des revendications précédentes, **caractérisé en ce que** les détecteurs (6 et 7) sont des détecteurs fin de course micrométrique dont l'un (6) est disposé verticalement afin d'assurer la détermination de la longueur et l'autre (7) est disposé horizontalement afin de déterminer le diamètre.

4. Dispositif de mesure automatique des dimensions d'un outil selon la revendication 3, **caractérisé en ce que** chacun des détecteurs (6 et 7) est relié. à un système de mesure propre des positions de la broche (10) permettant ainsi, lors de leur rupture de contact avec la barre (3), de déduire les dimensions de l'outil (2).

5. Dispositif de mesure automatique des dimensions d'un outil selon l'une quelconque des revendications précédentes, **caractérisé en ce que** le plateau (9) est pourvu d'un bord biseauté (11).

## Claims

1. Device for automatically measuring the dimensions of a tool for a machine tool, said device comprising a spindle (10) capable of accommodating a tool (2), which is able to be displaced to co-operate with the device (1) in order to deduce, as a function of a measuring system specific to said spindle (10), the dimensions of the tool (2), **characterised in that** it is made up of a bar (3), which is formed from a material having high resilient properties, one of the ends of which bar is integral with a yoke-shaped member (4), fixed on a fixed frame (5), and its opposite free end is in contact with two detectors (6 and 7), disposed perpendicularly relative to each other, and with a yoke-shaped member (8), capable of sliding on the flexible bar (3) on top of which is a plate (9), on which said tool (2) to be measured is capable of pressing.

2. Device for automatically measuring the dimensions of a tool according to claim 1, **characterised in that** the bar (3) is formed from a resilient steel and has a square cross section.

3. Device for automatically measuring the dimensions of a tool according to any of the preceding claims, **characterised in that** the detectors (6 and 7) are micrometric end-of-travel detectors, one of which detectors (6) is disposed vertically in order to ensure the determination of the length, and the other detector (7) is disposed horizontally in order to determine the diameter.

4. Device for automatically measuring the dimensions of a tool according to claim 3, **characterised in that** each of the detectors (6 and 7) is connected to a measuring system specific to the positions of the spindle (10), thereby permitting the dimensions of the tool (2) to be deduced when their contact with the bar (3) is broken.

5. Device for automatically measuring the dimensions of a tool according to any of the preceding claims, **characterised in that** the plate (9) is provided with a chamfered edge (11).

## Patentansprüche

1. Vorrichtung zur automatischen Messung der Abmessungen eines Werkzeugs für eine Bearbeitungsmaschine, umfassend eine Spindel (10), die ein Werkzeug (2) aufnehmen kann, das sich verschieben kann, um mit der Vorrichtung (1) zusammenzuwirken, um in Abhängigkeit von einem der Spindel (10) eigenen Messsystem die Abmessungen des Werkzeugs (2) abzuleiten, **dadurch gekennzeichnet, dass** sie von einem Stab (3) aus einem Material, das hohe elastische Eigenschaften besitzt, gebildet ist, wobei eines ihrer Enden mit einem. Bügel (4), der auf einem festen Gehäuse (5) angebracht ist, verbunden ist und ihr gegenüber liegendes freies Ende mit zwei Detektoren (6 und 7), die senkrecht zueinander angeordnet sind, und einem Bügel (8) in Kontakt ist, der auf der biegsamen Stange (3) gleiten kann, über der eine Platte (9) angeordnet ist, auf die das zu messende Werkzeug (2) gelegt werden kann.

2. Vorrichtung zur automatischen Messung der Abmessungen eines Werkzeugs nach Anspruch 1, **dadurch gekennzeichnet, dass** der Stab (3) aus einem elastischen Stahl hergestellt ist und einen quadratischen Querschnitt aufweist.

3. Vorrichtung zur automatischen Messung der Abmessungen eines Werkzeugs nach einem der vorhergehenden Ansprüche, **dadurch gekennzeichnet, dass** die Detektoren (6 und 7) Mikrometerenddetektoren sind, von denen einer (6) vertikal angeordnet ist, um die Bestimmung der Länge zu gewährleisten, und der andere (7) horizontal angeordnet ist, um den Durchmesser zu bestimmen.

4. Vorrichtung zur automatischen Messung der Abmessungen eines Werkzeugs nach Anspruch 3, **dadurch gekennzeichnet, dass** jeder der Detektoren (6 und 7) mit einem eigenen Messsystem der Positionen der Spindel (10) verbunden ist, wodurch es bei ihrer Kontaktunterbrechung mit dem Stab (3) möglich ist, die Abmessungen des Werkzeugs (2) abzuleiten.

5. Vorrichtung zur automatischen Messung der Abmessungen eines Werkzeugs nach einem der vorhergehenden Ansprüche, **dadurch gekennzeichnet, dass** die Platte (9) mit einem abgeschrägten Rand (11) versehen ist.
